(19) Europäisches Patentamt
European Patent Office
Office européen des brevets

(11) Veröffentlichungsnummer : **0 035 625**
**B1**

(12) # EUROPÄISCHE PATENTSCHRIFT

(45) Veröffentlichungstag der Patentschrift : **11.04.84**

(51) Int. Cl.³ : **A 01 G 17/18**, A 01 G 1/06, A 01 G 7/06, A 01 N 3/04

(21) Anmeldenummer : **81100208.8**

(22) Anmeldetag : **14.01.81**

(54) **Wundbehandlungs-, Wundverschluss- und Wundschutzmittel für Bäume.**

(30) Priorität : **06.02.80 DE 3004234**

(43) Veröffentlichungstag der Anmeldung : **16.09.81 Patentblatt 81/37**

(45) Bekanntmachung des Hinweises auf die Patenterteilung : **11.04.84 Patentblatt 84/15**

(84) Benannte Vertragsstaaten : **AT BE CH DE FR GB IT LI LU NL SE**

(56) Entgegenhaltungen :
**DE-A- 1 543 375**
**DE-A- 1 817 579**
**DE-A- 1 905 279**
**DE-A- 2 163 062**
**DE-A- 2 336 298**
**DE-A- 2 711 639**
**DE-B- 2 247 771**
**FR-A- 2 001 299**
**FR-A- 2 202 649**
**FR-A- 2 263 083**
**CENTRAL PATENTS INDEX, Basic Abstract Journal, C-AGDOC, Woche Y/09, Zusammenfassung 15534y Derwent Publications Ltd. London, GB**
**CENTRAL PATENT INDEX, Basic Abstract Journal, C-AGDOC, Woche Y/33, Zusammenfassung 58377y Derwent Publications Ltd. London, GB**

(73) Patentinhaber : **Desowag-Bayer Holzschutz GmbH.**
**Ross-Strasse 76**
**D-4000 Düsseldorf 1 (DE)**

(72) Erfinder : **Steinberg, Kurt, Dr. Dipl.-Chem.**
**Am Gengelsträsschen 4**
**D-4000 Düsseldorf-Nord (DE)**
Erfinder : **Metzner, Wolfgang, Dr. Dipl.-Chem.**
**Buschstrasse 151**
**D-4150 Krefeld (DE)**
Erfinder : **Goletz, Peter**
**Weserweg 90**
**D-4150 Krefeld 1 (DE)**

(74) Vertreter : **Seiler, Siegfried**
**DEUTSCHE SOLVAY WERKE GmbH Langhansstrasse 6**
**D-5650 Solingen 11 (DE)**

**EP 0 035 625 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Wundbehandlungs-, Wundverschluß- und Wundschutzmittel für Bäume

Die vorliegende Erfindung betrifft die Verwendung eines Mittels, enthaltend 0,5 bis 7 Gew.-%, vorzugsweise 2 bis 4 Gew.-% mindestens eines Salzes des N-Nitroso-N-cyclohexyl-hydroxylamins bzw. einer (N-Cyclohexyl-diazeniumdioxy)-verbindung eines ein-, zwei oder dreiwertigen Metalles, vorzugsweise Tris (N-Cyclohexyldiazeniumdioxy)-aluminium, 2,5 bis 35 Gew.-%, vorzugsweise 10 bis 30 Gew.-% mindestens eines Kunststoffes bzw. Kunstharzes (berechnet als Feststoff) in Form einer wasserverdünnbaren Kunststoffdispersion oder einer Kunstharzlösung und/oder mindestens eines Weichmachers und/oder eines trocknenden Öls und als Restbestandteil ein organisch-chemisches Lösungsmittel bzw. Lösungsmittelgemisch und/oder Wasser sowie ggf. ein oder mehrere Zusatzmittel für die Wundbehandlung lebender Bäume.

Aus der DE-C-21 63 062 ist ein Mittel zum Frischhalten von Schnittblumen bekannt, das aus einem Chlorcholinsalz, einem Silbersalz und einem Salz des N-Nitroso-N-Cyclohexylhydroxylomins besteht. Es dient dazu, ein vorzeitiges Welken der Schnittblumen zu verhindern. Dieses Welken wird jedoch nicht durch die Einwirkung von Holzschädlingen verursacht. In der DE-C-18 17 579 wird ein Holzschutzmittel beschrieben, das aus einer Kombination eines Alkali- oder Ammoniumsalzes des N-Nitroso-N-Cyclohexylhydroxylamins und einem Alkalihydroxid sowie einem Hydroxoanionen bildenden Metallhydroxid besteht.

Dieses Mittel ist zur Behandlung von bereits geschlagenem bzw. verbautem, d. h. totem Holz, bestimmt. Das gleiche gilt auch für das Holzschutzmittel gemäß der DE-C-23 36 290, das aus einer Kombination eines Aluminiumsalzes des N-Nitroso-N-Cyclohexylhydroxylamins und N-Fluordichlormethylthiophtalimid oder N,N-Dimethyl-N-phenyl-(N-flourdichlormethylthio)-sulfamid besteht. Bei lebenden Bäumen liegen jedoch andere Verhältnisse vor ; beispielsweise darf das Wachstum der Pflanzen und der osmotische Druck in denselben nicht nennenswert beeinflußt werden.

Aus der DE-B-22 47 771 ist ein Mittel zur Behandlung gewebeverletzter Pflanzen bekannt, dessen wesentlicher Bestandteil die rindengrünen bzw. rindengrauen Farbstoffe darstellen, die jedoch gemäß der vorliegenden Erfindung nicht beansprucht werden. Wie ein Studium der Zusammensetzungen der vier Ausführungsbeispiele dieser Literaturstelle ergibt, ist die Wirksamkeit der angegebenen Mittel auch ohne den in zwei Beispielen erwähnten Fungizidzusatz gegeben, d. h. also daß letzterem Zusatz keine Bedeutung für die Wirksamkeit des Mittels an Ort und Stelle zukommt. Dem Fungizidzusatz fällt eindeutig die Aufgabe zu, das Mittel als solches im Vorratsgefäß oder Behälter bei längerer Lagerung gegen Schimmelbefall zu schützen.

Ziel und Aufgabe der vorliegenden Erfindung war es, ein gut wirksames Wundbehandlungs-, Wundverschluß- und Wundschutzmittel für lebende Bäume zur bekämpfenden oder vorbeugenden Behandlung gegen Wundfäuleerreger wie Fomes annosus, Stereum sanguinolentum, Stereum areolatum in Oberflächenbeschädigungen der Wurzel- und Stammbereiche zu finden. Es sollte auf die behandelten Wunden eine nichttoxische und/oder nicht wachstumshindernde Wirkung aufweisen und die Wunde schützen.. Das Mittel sollte eine geschlossene Schicht oder einen Film auf dem Holz bilden und nicht abblättern oder reißen oder die Wunde verschließen. Die Wundheilung oder Überwallung sollte gefördert werden.

Erfindungsgemäß wurde festgestellt, daß bei der Verwendung eines Mittels, enthaltend 0,5 bis 7 Gew.-%, vorzugsweise 2 bis 4 Gew.-% mindestens eines Salzes des N-Nitroso-N-caclohexylhydroxylamins bzw. einer (N-Cyclohexyl-diazeniumdioxy)-verbindung eines ein-, zwei- oder dreiwertigen Metalles, vorzugsweise Tris(N-Cyclohexyldiazeniumdioxy)-aluminium, 2,5 bis 35 Gew.-%, vorzugsweise 10 bis 30 Gew.-% mindestens eines Kunststoffes bzw. Kunstharzes (berechnet als Feststoff) in Form einer wasserverdünnbaren Kunststoffdispersion oder einer Kunstharzlösung und/oder mindestens eines Weichmachers und/oder eines trocknenden Öls und als Restbestandteil ein organisch-chemisches Lösungsmittel bzw. Lösungsmittelgemisch und/oder Wasser sowie ggf. ein oder mehrere Zusatzmittel diese gestellten Aufgaben gelöst werden.

Das anwendungsfertige Mittel besteht aus einer Wasser und/oder ein organisch-chemisches Lösungsmittel oder Lösungsmittelgemisch enthaltenden Emulsion, Dispersion, Lösung oder Paste und kann nach an sich bekannten Wundbehandlungs- und Auftragsverfahren auf die Baumwunden und evtl. angrenzenden Bereiche aufgetragen werden.

Unter Verwendung dieses Mittels gelingt es, die Baumwunden ohne Wachstumshinderung für den lebenden Baum zu behandeln, die Wunden zu schützen und eine geschlossene Schicht bzw. einen Film auf der Wunde sowie ggf. den angrenzenden Stellen zu bilden, die bzw. der nicht abblättert oder reißt. Die Wundheilung oder Überwallung wird gefördert. Als Kunststoff bzw. Kunstharz wird nach einer Ausführungsform eine wasserhaltige oder wasserverdünnbare Vinylester- und/oder Acrylsäureester- und/oder Methacrylsäureesterpolymerisatdispersion oder -copolymerisatdispersion mit einem Feststoffgehalt von 35 bis 65 Gew.-%, vorzugsweise 45 bis 55 Gew.-%, eingesetzt. Als Kunstharzlösungen werden wasserlösliche Kunstharze in Form der Kunstharzlösung oder in einem organisch-chemischen Lösungsmittel gelöste Kunstharze, vorzugsweise in einem organisch-chemischen wasserlöslichen Lösungsmittel gelöste wasserverdünnbare Alkydharze, eingesetzt. Als trocknendes Öl wird bevorzugt ein trocknendes Öl pflanzlicher Herkunft eingesetzt.

Zweckmäßig wird das trocknende Öl in Kombination mit einem wasserlöslichen Polyol eingesetzt. Das organisch-chemische, wasserlösliche Lösungsmittel für das Alkydharz ist bevorzugt ein wasserlösliches Glykol, beispielsweise Äthylen- oder Butyglykol oder ein anderes wasserlösliches Alkylenglykol oder eines deren wasserlöslichen Derivate, beispielsweise ein äther- oder estergruppenhaltiges Derivat.

Als organisch-chemische Lösungsmittel, die zur Herstellung der Lösung, Emulsion oder Dispersion des Wundbehandlungs-, Wundverschluß- und Wundschutzmittels für Bäume einsetzbar sind, werden vorzugsweise auch wasserunlösliche Lösungsmittel, bestehend aus einem schwerflüchtigen Lösungsmittel mit einer Verdunstungszahl über 35 und einem Flammpunkt oberhalb 50 °C, verwendet. Zweckmäßig besteht oder enthält das organisch-chemische eingesetzte wasserunlösliche Lösungsmittel oder Lösungsmittelgemisch ein mineralölhaltiges Lösungsmittel.

Als derartige Lösungsmittel werden entsprechende Mineralöle oder deren Aromatenfraktionen oder mineralölhaltige Lösungsmittelgemische, vorzugsweise Testbenzin und/oder Alkylbenzole usw. verwendet.

Nach einer Ausführungsform wird das organisch-chemische schwerflüchtige Lösungsmittel ganz oder teilweise durch einen Lösevermittler, bestehend aus einem oder mehreren Weichmachern, ersetzt. Diese Ausführungsform hat den Vorteil, daß der Gehalt an Lösungsmitteln noch weiter herabgesetzt oder sogar vollständig eingespart werden kann.

Als Weichmacher sind beispielsweise geeignet : Alkyl-, Aryl- oder Aralkylphthalate, vorzugsweise Dibutyl-, Dioctyl- und Benzylbutylphthalate, Alkylphosphate bzw. Phosphatsäureester, vorzugsweise Tributylphosphat, Adipate, vorzugsweise Di-(2-äthylhexyl)-adipat, Stearate und Oleate, z. B. Alkylstearate oder Alkyloleate, vorzugsweise Butyloleat, Butylstearat oder Amylstearat, Bis-(dimethylbenzyl)äther, p-Toluolsulfonsäureäthylester, Glycerinester, Glycerinäther oder höhermolekulare Glykoläther.

Nach einer zweckmäßigen Ausführungsform werden (bezogen auf 100 Gew.-% eingesetztes organisch-chemisches, schwerflüchtiges Lösungsmittel) bis zu 65 Gew.-%, vorzugsweise bis zu 40 Gew.-%, des organisch-chemischen, schwerflüchtigen Lösungsmittels oder Lösungsmittelgemisches durch einen Weichmacher oder durch ein Weichmachergemisch ersetzt.

Nach einer bevorzugten Ausführungsform enthält das Mittel zusätzlich 0,1 bis 4 Gew.-%, vorzugsweise 0,5 bis 2 Gew.-%, eines wasserunlöslichen, jedoch in einem ölartigen oder aromatischen, schwerflüchtigen Lösungsmittel oder Lösungsmittelgemisch löslichen Insektizides oder Insektizidgemisches.

Das wasserunlösliche, in einem organisch-chemischen Lösungsmittel oder Lösungsmittelgemisch lösliche organische Insektizid besteht vorzugsweise aus einem Carbamat, einem Phosphorsäureester, einem Thiophosphorsäureester, einem Dithiophosphorsäureester oder einem Thionophosphorsäureester, einem chlorierten Chlorkohlenwasserstoff, einem Pyrethroid und/oder aus Endosulfan oder aus zwei oder mehreren dieser Verbindungen.

Als chlorierte Kohlenwasserstoffe werden bevorzugt Dieldrin, Aldrin und Lindan eingesetzt. Von den Pyrethroiden gelangen bevorzugt Allethrin, Cyclethrin, Furethrin, Tetramethrin, Resmethrin, Bioresmethrin sowie andere insektizide Wirkstoffe des Pyrethrums zur Anwendung.

Nach einer Ausführungsform kann der in dem Wundbehandlungs-, Wundverschluß- und Wundschutzmittel eingesetzte Wirkstoff, bestehend aus mindestens einem Salz des N-Nitroso-N-cyclohexylhydroxylamins bzw. einer (N-Cyclohexyl-diazeniumdioxy)-verbindung eines ein-, zwei- oder dreiwertigen Metalles, vorzugsweise Tris (N-Cyclohexyldiazeniumdioxy)-aluminium, bis zu 40 Gew.-%, vorzugsweise bis zu 20 Gew.-% (bezogen auf 100 Gew.-% des Wirkstoffes oder Wirkstoffgemisches) durch ein Fungizid ersetzt werden.

Als Fungizid oder Fungizidgemisch werden solche Fungizide eingesetzt, die in dem mitverwendeten organischchemischen Lösungsmittel oder Lösungsmittelgemisch löslich sind. Bevorzugt gelangen tetravalente zinnorganische Verbindungen, chlorierte Phenole, vorzugsweise Ester chlorierter Phenole, z. B. Pentachlorphenollaurylsäureester, fungizide 1-Trityl-1,2,4-triazole der allgemeinen Formel

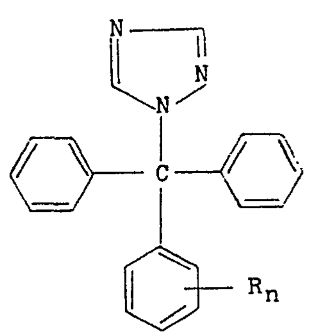

in welcher R für ein Fluor-, Chlor- oder Bromatom, eine Trifluormethyl-, Nitro- oder Cyanogruppe oder eine Alkylgruppe mit bis zu 4 Kohlenstoffatomen und n für die Zahlen 1 oder 2 steht, sowie deren Salze von organischen oder anorganischen Säuren, oder Gemische aus zwei oder mehreren dieser Verbindungen zum Einsatz.

Als öllösliche tetravalente fungizide zinnorganische Verbindungen können beispielsweise eingesetzt werden : Tributylzinnbenzoat, Tris(tributylzinn)phosphat, Bis-(tri-butylzinn)oxid.

Nach einer Ausführungsform werden die Wirkstoffe in Kombination mit Wachsen (wie Bienenwachs, Erdwachs, und dgl.) oder wachsähnlichen Substanzen (wie Paraffine, Polyäthylenwachs) oder Wachserzatzstoffen (z. B. Kolophonium in Kombination mit Vasilin und dgl.) eingesetzt.

Um eine Infektion der beschädigten lebenden Bäume, beispielsweise durch Fäulnis und dgl. zu verhindern, wird bei der Verwendung des erfindungsgemäßen Mittels ein Wundverschluß mit gleichzeitiger vorbeugender insektizider und/oder fungizider Wirkung geschaffen.

Die unter erfindungsgemäßer Verwendung des Mittels behandelten Wunden zeigten einen guten Wundverschluß bzw. gute Verharzung, gute Überwallung von den Wundrändern, ohne jedoch größere Rißbildung aufzuweisen. Da dieses Mittel besondere Vorteile bei der Anwendung an beschädigten Nadelhölzern, insbesondere Fichten, aber auch an Laubbäumen wie Buchen aufweist, kann es als Wundbehandlungs-, Wundverschluß- und Wundschutzmittel besonders für den Forst, aber auch für Obst- und Zierbäume verwendet werden.

Erfindungsgemäß wurde weiterhin festgestellt, daß das Mittel auch zur Behandlung von Oberflächenbeschädigungen im Wurzel- und Stammbereich von Nadelbäumen verwendet werden kann.

## Beispiele

| | |
|---|---|
| 1. Handelsübliche homopolymere Polyvinylacetat-Dispersion (Feststoffgehalt 50 Gew.-%) | 46,- Gew.-% |
| Safloröl | 12,- Gew.-% |
| Phthalsäureester | 12,- Gew.-% |
| Tris(N-Cyclohexyldiazeniumdioxy)-aluminium | 4,- Gew.-% |
| Lindan | 2,5 Gew.-% |
| Aromatischer Kohlenwasserstoff (Flpkt. nach DIN 51755 bzw. 51758 : 63 °C ; Verdunstungszahl : 148) | 23,5 Gew.-% |
| | 100,- Gew.-% |

| | |
|---|---|
| 2. Handelsüblicher Acrylat-Dispersion (Feststoffgehalt 50 Gew.-%) | 50,- Gew.-% |
| Tris(N-Cyclohexyldiazeniumdioxy)-aluminium | 4,- Gew.-% |
| Lindan | 2,6 Gew.-% |
| Dibutylphthalat | 10,- Gew.-% |
| Lackleinöl | 10,- Gew.-% |
| Aromatischer Kohlenwasserstoff (Flpkt. nach DIN 51755 bzw. 51758 : 63 °C ; Verdunstungszahl : 148) | 9,4 Gew.-% |
| Wasser | 14,- Gew.-% |
| | 100,- Gew.-% |

| | |
|---|---|
| 3. Handelsübliche homopolymere Polyvinylacetat-Dispersion (Feststoffgehalt 50 Gew.-%) | 40,- Gew.-% |
| Wasserverdünnbares mittelöliges Alkydharz auf Basis von Sojafettsäure (70 %-ig ; Alkydal F 501 W gelöst in Butylglykol) | 10,- Gew.-% |
| Phthalsäureester | 13,- Gew.-% |
| Tris(N-Cyclohexyldiazeniumdioxy)-aluminium | 2,- Gew.-% |
| Lindan | 2,- Gew.-% |
| Aromatischer Kohlenwasserstoff (Flpkt. nach DIN 51755 bzw. 51758 : 63 °C ; Verdunstungszahl : 148) | 19,- Gew.-% |
| Wasser | 14,- Gew.-% |
| | 100,- Gew.-% |

| | |
|---|---|
| 4. Handelsübliche homopolymere Polyvinylacetat-Dispersion (Feststoffgehalt 50 Gew.-%) | 48,5 Gew.-% |
| Safloröl | 12,- Gew.-% |
| Phthalsäureester | 12,- Gew.-% |
| Tris(N-Cyclohexyldiazeniumdioxy)-aluminium | 4,- Gew.-% |
| Aromatischer Kohlenwasserstoff (Flpkt. nach DIN 51755 bzw. 51758 : 63 °C ; Verdunstungszahl : 148) | 23,5 Gew.-% |
| | 100,- Gew.-% |

| | |
|---|---|
| 5. Langöliges Alkydharz auf Basis trocknender pflanzlicher Fettsäuren (Ölgehalt 65 %) | 6,- Gew.-% |
| Tris(N-Cyclohexyldiazeniumdioxy)-aluminium | 3,6 Gew.-% |
| Lindan | 0,4 Gew.-% |
| Aliphatischer Kohlenwasserstoff (Flpkt. nach DIN 51755 bzw. 51758 : 59 °C ; Verdunstungszahl : 197 | 70,- Gew.-% |
| Aromatischer Kohlenwasserstoff (Flpkt. nach DIN 51755 bzw. 51758 : 63 °C ; Verdunstungszahl : 148) | 20,- Gew.-% |
| | 100,- Gew.-% |

**Ansprüche**

1. Verwendung eines Mittels, enthaltend

0,5 bis 7 Gew.-%, vorzugsweise
2 bis 4 Gew.-%

mindestens eines Salzes der N-Nitroso-N-cyclohexylhydroxylamins bzw. einer (N-Cyclohexyl-diazeniumdioxy)-verbindung eines ein-, zwei- oder dreiwertigen Metalles, vorzugsweise Tris(N-Cyclohexyldiazeniumdioxy)-aluminium,

2,5 bis 35 Gew.-%, vorzugsweise
10 bis 30 Gew.-%

mindestens eines Kunststoffes bzw. Kunstharzes (berechnet als Feststoff) in form einer wasserverdünnbaren Kunststoffdispersion oder einer Kunstharzlösung und/oder mindestens eines Weichmachers und/oder eines trocknenden Öls und als Restbestandteil ein organisch-chemisches Lösungsmittel bzw. Lösungsmittelgemisch und/oder Wasser sowie ggf. ein oder mehrere Zusatzmittel, als Wundbehandlungs-, Wundverschluß- und Wundschutzmittel für lebende Bäume zur bekämpfenden oder vorbeugenden Behandlung gegen Wundfäuleerreger wie Fomes annosus, Stereum sanguinolentum, Stereum areolatum in Oberflächenbeschädigungen der Wurzel und Stammbereiche.

2. Verwendung des Mittels nach Anspruch 1, dadurch gekennzeichnet, daß das Mittel zusätzlich

0,1 bis 4 Gew.-%, vorzugsweise
0,5 bis 2 Gew.-%

eines wasserunlöslichen jedoch in einem ölartigen oder aromatischen, schwerflüchtigen Lösungsmittels oder Lösungsmittelgemisch löslichen Insektizides oder Insektizidgemisches enthält.

3. Verwendung des Mittels nach Anspruch 1 oder 2 zur Behandlung der Oberflächenbeschädigungen im Wurzel- und Stammbereich von Nadelbäumen.

**Claims**

1. Use of an agent containing

0.5 to 7 %-wt., preferably
2 to 4 %-wt.

of at least one salt of the N-nitroso-N-cyclohexylhydroxylamines or of a (N-cyclohexyl-diazeniumdioxy)-compound of a mono-, di- or tri-valent metal, preferably tris(N-cyclohexyldiazeniumdioxy)-aluminium,

2.5 to 35 %-wt., preferably
10 to 30 %-wt.

of at least one synthetic material or synthetic resin (calculated as solid matter) in the form of a waterdilutable synthetic material dispersion or of a synthetic resin solution and/or of at least one softener and/or of a drying oil and as remaining constituent an organochemical solvent or solvent mixture and/or water and also if required one or more additives, as agent for wound treatment, wound sealing and wound protection for living trees for the controlling and preventive treatment against causes of wound rot such as fomes annosus, stereum sanguinolentum, stereum areolatum in superficial damage to the roots and trunk areas.

2. Use of the agent according to Claim 1, characterised in that the agent contains in addition

0.1 to 4 %-wt., preferably
0.5 to 2 %-wt.

of a water-insoluble insecticide or insecticide mixture which is, however, soluble in an oily or aromatic, difficulty volatilizable solvent or solvent mixture.

3. Use of the agent according to Claim 1 or 2 for the treatment of superficial damage in the root and trunk areas of conifers.

**Revendications**

1. Emploi d'un agent contenant

0,5 à 7 % en poids, de préférence
2 à 4 % en poids,

d'au moins un sel de la N-nitroso-N-cyclohexylhydroxylamine ou d'un composé (N-cyclohexyldiazénium-dioxy) d'un métal monovalent, divalent ou trivalent, de préférence de tris(N-cyclohexyldiazéniumdioxy)-aluminium,

2,5 à 35 % en poids, de préférence
10 à 30 % en poids,

d'au moins une matière synthétique ou résine synthétique (calculée à l'écart de matière solide) sous la forme d'une dispersion de matière synthétique diluable par de l'eau ou d'une solution de résine synthétique et/ou d'au moins un plastifiant et/ou d'une huile siccative, et, comme constituant restant, un solvant ou mélange de solvants organique et/ou de l'eau ainsi qu'éventuellement un ou plusieurs additifs, comme agent de traitement, de cicatrisation et de protection de blessures d'arbres vivants, pour combattre ou prévenir l'attaque de générateurs de pourriture des blessures tels que le Fomes annosus, le Stereum sanguinolentum, le Stereum areolatum dans des blessures superficielles des racines et du tronc.

2. Emploi de l'agent suivant la revendication 1, caractérisé en ce que cet agent contient en outre

0,1 à 4 % en poids, de préférence
0,5 à 2 % en poids,

d'un insecticide ou mélange d'insecticides insoluble dans l'eau mais soluble dans un solvant ou mélange de solvants huileux ou aromatique, peu volatil.

3. Emploi de l'agent suivant la revendication 1 ou 2, pour le traitement de blessures superficielles sur les racines et sur le tronc des conifères.